# EUROPEAN PATENT SPECIFICATION

(11) **EP 1 928 580 B1**
(45) Date of publication and mention of the grant of the patent: **20.08.2014**
(21) Application number: 06783901.9
(22) Date of filing: 28.08.2006
(51) Int. Cl.: B01D 53/04, B01D 53/02, B01D 53/08, B01D 53/06, B01D 53/26

(54) **METHOD AND DEVICE FOR SEPARATING A SUBSTANCE FROM A PROCESS GAS**
VERFAHREN UND VORRICHTUNG ZUR ABTRENNUNG EINER SUBSTANZ AUS EINEM PROZESSGAS
PROCEDE ET DISPOSITIF POUR SEPARER UNE SUBSTANCE D'UN GAZ DE PROCESSUS

(30) Priority: 26.08.2005 NL 1029822; 10.10.2005 NL 1030149; 28.11.2005 NL 1030538
(43) Date of publication of application: 11.06.2008
(73) Proprietor: Optimair Holding B.V., 8334 RW Tuk (NL)
(72) Inventor: MEIJER, Willem, NL-7021 DV Zelhem (NL)
(74) Representative: Schumann, Bernard Herman Johan
(86) International application number: PCT/NL2006/000434
(87) International publication number: WO 2007/024132

(56) References cited:
- US-A- 4 683 258
- US-A- 5 534 186

## Description

The invention relates to a method for separating a substance from a process gas as described in the preamble of claim 1 and a device for performing this method as described in the preamble of claim 5. Such a separating method and separating device are generally known.

Sorption dryers or cleaners are used to dry or to clean media, particularly gases, by means of (ab or ad)sorption of respectively moisture present therein or contaminants present therein. Absorption is the case when the material which extracts the moisture from the medium thereby undergoes a physical or chemical change, is for instance dissolved in the moisture. Adsorption is the case when the extracted moisture is only held on or in the surface of the material. Both these phenomena are referred to hereinbelow respectively with the term "sorption" and "sorbing". Applications of this principle are for instance the drying of ambient air by sorbing water present therein, as for instance takes place in climate control systems for buildings. Another example is the cleaning of a gas, such as methane, transported through a conduit system, by sorbing methane hydrides present therein. It is of course also possible to envisage other combinations of gases and substances to be separated therefrom.

Drying or cleaning gas flows in this manner is in fact a two-stage process. In a first process step the undesired substances, so the moisture or the contaminants, are sorbed from the gas flow for drying or cleaning by guiding the gas, referred to below as "process gas", along a material which has respectively a greater affinity for these substances or a lower vapour pressure than the gas itself. In a second step of the process the sorbed substances are then relinquished once again to another medium, for instance a gas flow for discharge, referred to below as "auxiliary gas". In order to release the substances from the sorbing material the temperature must generally be increased considerably so as to increase the vapour pressure thereof above that of the auxiliary gas flow for discharge.

In the example of the drying of air in climate control, moisture is thus extracted from air which is drawn in from outside and this moisture is in turn relinquished to air which is extracted from the building and blown to the outside again. In order to extract water from the outside air, the air is guided along surfaces which are covered with a layer of strongly water-adsorbent material such as silica gel. In order to then relinquish the water again, air, for instance (part of) the discharge air, is heated to above the boiling point of water and guided along the adsorbent material, whereafter the water vapour can escape therefrom and is entrained in the exiting air flow. The adsorbent material is hereby regenerated and is once again able to extract large quantities of water from the air.

Use is here usually made in practice of a rotating wheel with a number of surfaces which extend in radial direction and which are covered with the adsorbent material. This wheel is placed between a supply channel and a discharge channel with its rotation shaft parallel to the direction of flow of the air in the channels such that the covered surfaces move through the supply channel during a part of a rotation and through the discharge channel during the remaining part of the rotation. During the passage through the supply channel the covered surfaces extract water from the indrawn air, and during the passage through the discharge channel this water is relinquished once again. In order to release as much water as possible from the adsorbent material in the short time that the surfaces move through the discharge channel, the wheel must be heated far above the boiling point of water, for instance to 180°C. This requires a lot of energy; not only to heat the water to the boiling point and beyond, but mainly to evaporate the water, since the evaporation heat of water is much greater than the specific heat thereof.

A considerable energy saving is achieved by using as sorption material a material which has a sorption state in which it has a relatively great take-up capacity for the substance, as well as a desorption state in which the take-up capacity is smaller, and by transferring the sorption material from the sorption state to the desorption state at a temperature lower than the boiling point of the sorbed substance for the purpose of regeneration. This saving consists on the one hand of a reduction in the amount of energy necessary to heat the auxiliary gas, since the regeneration takes place at a lower temperature than heretofore. In addition, the evaporation heat is saved in that the sorbed substance no longer need be evaporated but is released from the sorption material simply by changing the state thereof. Finally, the sorption material remains cooler, whereby the process gas is heated less. This is particularly important when the method is applied for drying ambient air in a climate control system.

The sorption material comprises a polymer with low critical solution temperature (LCST polymer), and this is transferred from the sorption to the desorption state by being heated above its critical solution temperature. Such an LCST (Lower Critical Solution Temperature) polymer is a polymer which can be dissolved in the substances for separating up to a determined temperature, the critical solution temperature - the transition point between the sorption and desorption state - but no further above this critical solution temperature, so that the absorbed substances are in fact repelled. The stability of the polymer in dissolved state is ensured here by suitable chosen cross-linkers. The transition point clearly lies below the boiling point of the substances for separating. Because the transition point of an LCST polymer is so low, for instance in the order of 60-70°C, the polymer requires far less heating than is required in the case of common sorbing materials such as silica gel.

US-A-5 534 186 discloses a vapor extraction apparatus includes a gel sorbent capable of absorbing vapor directly into the liquid state and capable of disgorging the absorbed liquid in a phase-transition. The apparatus includes a housing adapted for movement from a first position, where it is exposed to a vapor-containing gas stream and a first environmental condition, and capable of moving to a second position, where it is exposed to a second environmental condition. A gel sorbent is disposed on at least one surface of the housing. The gel sorbs vapor from the gas stream as liquid when the sorbent is in its first position. The sorbent disgorges the liquid during phase-transition collapse when it is in the second position. A method of extracting vapor from a process gas stream includes contacting a phase transition gel sorbent with vapor under conditions sufficient for the gel sorbent to undergo a phase transition and absorb vapor as liquid inside the gel sorbent. The gel sorbent is then exposed to conditions sufficient for it to undergo a phase transition and disgorge the liquid from inside the gel sorbent. The disgorged liquid is removed from the gel sorbent.

The invention now has for its object to provide a method and a device for separating a substance from a process gas which requires less energy than the above described known separating method and device and/or which makes use of an alternative sorption material. According to the invention this is achieved by a method as described in claim 1 and by a device as described in claim 5, wherein the LCST polymer can advantageously be chosen from the group comprising polyoxazoline and poly(dimethylamino ethyl methacrylate) (pDMAEMa).

The sorption material is preferably arranged on a carrier, and the process gas is brought into contact therewith by causing it to flow along or through the carrier. In this case the sorption material can be regenerated by causing the auxiliary gas to flow along or through the carrier. The carrier can herein form a wall of a channel through which the process gas or the auxiliary gas flows, on which the sorption material is then arranged in the form of a coating. It is also possible to envisage the carrier forming a grid through which the process gas or auxiliary gas can flow.

Preferred embodiments of the separating device according to the invention are described in the dependent claims 6-10.

Finally, the invention further relates to a carrier with sorption material according to claim 11, which is evidently intended for application in such a separating device.

The invention is now elucidated on the basis of an embodiment, wherein reference is made to the accompanying drawing, in which:
Fig. 1 shows schematically an embodiment of the separating device in use as air dryer, and
Fig. 2A-B show the structure of two suitable LCST polymers for application as sorption material in the separating device of fig. 1.

A device 1 for separating a substance S from a process gas P, in this case for separating moisture from air, comprises means (not shown here) for supplying process gas P, for instance in the form of a fan and a channel with which outside air is drawn in for cooling and/or ventilating a building. Separating device 1 further comprises means 2 for bringing process gas P into contact with a sorption material M for the purpose of causing substance S to pass from process gas P into sorption material M. In addition, device 1 comprises means (not shown here) for discharging the process gas P' from which substance S is separated, for instance in the form of a discharge channel leading to a climate control system. Finally, there are also means 3 for regenerating sorption material M by relinquishing the substance S sorbed therein or thereon to an auxiliary gas A. This auxiliary gas A can be formed by the used air which is extracted from the building, but can also be outside air drawn in specially for this purpose.

In the shown embodiment of separating device 1 the sorption material M is arranged on a number of carriers 4 and contact means 2 are adapted to cause process gas P to flow along carriers 4. Regeneration means 3 are also adapted to cause auxiliary gas A to flow along carriers 4. Carriers 4 are herein movable and can be connected alternately to contact means 2 and regeneration means 3. This is because each carrier 4 forms part of a channel 5 which is defined by spokes 6 and the periphery 7 of a wheel 8 rotating along contact means 2 and regeneration means 3. In this case the spokes 6 and periphery 7 of wheel 8 thus function as carriers 4 which are covered with a layer of sorption material M.

Wheel 8 rotates relatively slowly under the influence of a motor 9 and a drive belt 10, for instance at a speed of twelve revolutions per hour, so that each channel 5 is practically stationary relative to the flow of process gas P and auxiliary gas A. Gases P, A can then be guided through wheel 8 at relatively low speed so that their dwell time is sufficient to enable a practically complete transfer of substance S from process gas P to sorption material M, and from sorption material M to auxiliary gas A.

Although not shown here in detail, it will be apparent that wheel 8 is mounted rotatably in a closed housing. A schematically shown partition wall 11 is arranged in the housing to prevent undesired mixing of process gas P and auxiliary gas A. The form and location of partition wall 11 determines during which part of the rotation of wheel 8 substance S is sorbed therein in or on material M, and during which part of the rotation the material M is once again regenerated by relinquishing substance S. In the shown embodiment about three-quarters of the rotation is devoted to the sorption and a quarter to the regeneration.

An important feature of separating device 1 according to the invention is that a material is chosen as sorption material M which has a sorption state in which it has a relatively large take-up capacity for substance S, as well as a desorption state in which the take-up capacity is smaller. It is hereby possible to have the regeneration, which is carried out when sorption material M is in the desorption state, take place at a temperature which is lower than the boiling point of the sorbed substance S.

In the shown embodiment the sorption material M comprises a polymer with low critical solution temperature (LCST polymer), and regeneration means 3 are adapted to heat the sorption material M above its critical solution temperature. For this purpose regeneration means 3 comprise here a gas burner 12 whereby auxiliary gas A is heated to a value which lies relatively far above the critical solution temperature of the polymer but still below the boiling point of the sorbed substance S. The value of the critical solution temperature does of course depend on the selected LCST polymer, but is in any case considerably lower than 100°C. Because the temperature is so low, the sorption material will remain relatively cool during the regeneration, so that process gas P will also be heated only in small measure when it flows through wheel 8. The amount of energy required to cool process gas P in the subsequent climate control unit is hereby also smaller than would be the case in a conventional device on the basis of silica gel.

Different classes of LCST polymers suitable for application in such a separating device 1 have been found. The properties of these polymers can be geared precisely to the intended use by adding co-monomers or by cross-linking using suitably selected cross-linkers (bi-functional monomers).

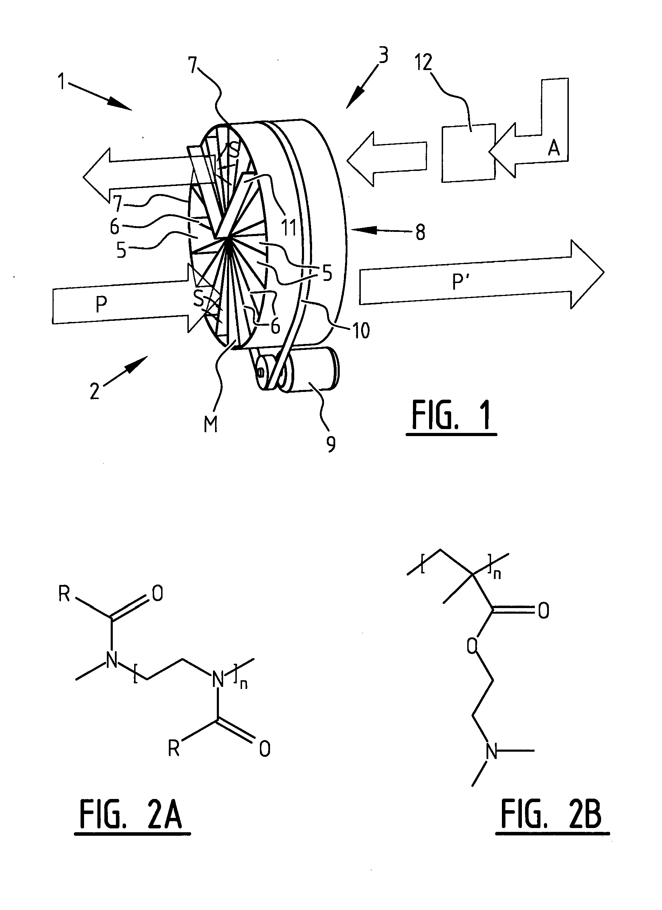

A first class is that of the polyoxazolines. Such polyoxazolines can be obtained by means of a cationic ring opening polymerization of oxazoline monomers under the influence of an initiator. It is for instance possible to use 2-ethyl-2-oxazoline as monomer and methyl tosylate as initiator. Cross-linking can take place after the polymerization of the oxazolines, for instance by making use of a radical polymerization mechanism. A suitable cross-linker is 2-isopropenyl-2-oxazoline. The structure of this polymer is shown in Fig. 2A. The value of the LCST depends on the rest R. When R represents ethyl, the value of LCST is about 68°C, while it is about 40°C when the rest R is isopropyl.

Polyoxazolines are highly hygroscopic and when exposed to air will absorb water therefrom, whereby they are particularly suitable for application in an air dryer as described above. The presence of a sufficient quantity of cross-linkers prevents the polymer becoming liquid after absorbing water. The polymer hereby remains adhered to carrier 4, even when the substance S is sorbed therein. The content of cross-linker should however not be too high, since the take-up capacity of the polymer hereby decreases.

A second type of polymer which appears to be highly suitable for application in a separating device of the type discussed here is poly (dimethylamino ethyl methacrylate), short designation pDMAEMa. This polymer is obtained by radical polymerization of acrylate monomers. Cross-linking takes place here at the same time as the polymerization, wherein a cross-linker on the basis of ethylene glycol can be used so as to optimize the processability of the obtained polymer. The structure of pDMAEMa, which has an LCST of about 28°C, is shown in Fig. 2B.

The invention thus makes it possible - with a suitable choice of the sorption material - to separate from gases all kinds of undesired substances, such as moisture or contaminants, and to relinquish them again to the environment using only a relatively small amount of energy.

Although the invention is described above on the basis of a number of embodiments, it will be apparent that it is not limited thereto and can be varied in many ways within the scope of the following claims.

## Claims

1. Method for separating a substance from a process gas, comprising the steps of:
a) supplying the process gas,
b) bringing the process gas into contact with a sorption material, wherein the substance passes from the process gas into the sorption material,
c) discharging the process gas from which the substance has been separated, and
d) regenerating the sorption material by relinquishing the substance sorbed therein or thereon to an auxiliary gas,
wherein:
- as sorption material a material is used which has a sorption state in which it has a relatively great take-up capacity for the substance, as well as a desorption state in which the take-up capacity is smaller,
- the sorption material is transferred from the sorption state to the desorption state at a temperature lower than the boiling point of the sorbed substance for the purpose of regeneration, and
- the sorption material comprises a polymer with low critical solution temperature (LCST polymer), and is transferred from the sorption to the desorption state by heating the polymer above its critical solution temperature, **characterized in that** the LCST polymer is chosen from the group comprising polyoxazoline and poly (dimethylamino ethyl methacrylate) (pDMAEMa).

2. Method as claimed in claim 1, **characterized in that** the sorption material is arranged on a carrier in the form of a coating, and the process gas is brought into contact therewith by causing it to flow along or through the carrier coated with the sorption material.

3. Method as claimed in any of the foregoing claims, **characterized in that** the sorption material is regenerated by causing the auxiliary gas to flow along or through the carrier coated with the sorption material.

4. Method as claimed in any of the foregoing claims, **characterized in that** the polymer includes cross-linkers to ensure its stability in the sorption state.

5. Device for separating a substance from a process gas, comprising:
- means for supplying the process gas,
- means for bringing the process gas into contact with a sorption material in order to cause the substance to pass from the process gas into the sorption material,
- means for discharging the process gas from which the substance has been separated, and
- means for regenerating the sorption material by relinquishing the substance sorbed therein or thereon to an auxiliary gas,
wherein:
- as sorption material a material is chosen which has a sorption state in which it has a relatively great take-up capacity for the substance, as well as a desorption state in which the take-up capacity is smaller,
- the regenerating means are adapted to transfer the sorption material from the sorption state to the desorption state at a temperature lower than the boiling point of the sorbed substance, and
- the sorption material comprises a polymer with low critical solution temperature (LCST polymer), and the regenerating means are adapted to heat the sorption material above its critical solution temperature,
**characterized in that** the LCST polymer is chosen from the group comprising polyoxazoline and poly(dimethylamino ethyl methacrylate) (pDMAEMa).

6. Separating device as claimed in claim 5, **characterized in that** the sorption material is arranged on a carrier in the form of a coating, and the contact means are adapted to cause the process gas to flow along or through the carrier coated with the sorption material.

7. Separating device as claimed in claim 6, **characterized in that** the regenerating means are adapted to cause the auxiliary gas to flow along or through the carrier coated with the sorption material.

8. Separating device as claimed in claim 7, **characterized in that** the carrier is movable and can be connected alternately to the contact means and the regenerating means.

9. Separating device as claimed in claim 8, **characterized in that** the carrier forms part of a channel which is incorporated in a wheel rotating along the contact means and the regenerating means.

10. Separating device as claimed in any of claims 5 to 9, **characterized in that** the polymer includes cross-linkers to ensure its stability in the sorption state.

11. Carrier with sorption material, evidently intended for use in a separating device as claimed in any of the claims 6 to 10, the sorption material comprising a polymer with low critical solution temperature (LCST polymer),
**characterized in that**
the LCST polymer is chosen from the group comprising polyoxazoline and poly(dimethylamino ethyl methacrylate) (pDMAEMa).

## Patentansprüche

1. Verfahren zum Trennen einer Substanz von einem Prozessgas, aufweisend die folgenden Schritte:
a) Bereitstellen des Prozessgases,
b) in-Kontakt-Bringen des Prozessgases mit einem Sorptionsmaterial, wobei die Substanz aus dem Prozessgas in das Sorptionsmaterial übergeht,
c) Ableiten des Prozessgases, von dem die Substanz getrennt wurde, und
d) Regenerieren des Sorptionsmaterials durch Aufgeben der darin oder daran sorbierten Substanz an ein Hilfsgas,
wobei:
- als Sorptionsmaterial ein Material verwendet wird, das einen Sorptionszustand, in dem es eine relativ hohe Aufnahmekapazität für die Substanz hat, sowie einen Desorptionszustand hat, in dem die Aufnahmekapazität geringer ist,
- das Sorptionsmaterial zum Zweck des Regenerierens bei einer Temperatur, die niedriger als der Siedepunkt der sorbierten Substanz ist, aus dem Sorptionszustand in den Desorptionszustand übertragen wird, und
- das Sorptionsmaterial ein Polymer mit einer unteren kritischen Lösungstemperatur (LCST-Polymer) aufweist und mittels Aufheizens des Polymers über seine kritische Lösungstemperatur aus dem Sorptionszustand in den Desorptionszustand übertragen wird,
**dadurch gekennzeichnet, dass** das LCST-Polymer aus der Gruppe ausgewählt wird, die Polyoxazolin und Poly(dimethylaminoethylmethacrylat) (pDMAEMa) aufweist.

2. Verfahren gemäß Anspruch 1, **dadurch gekennzeichnet, dass** das Sorptionsmaterial auf einem Träger in Form einer Beschichtung angeordnet ist und das Prozessgas damit in Kontakt gebracht wird, indem bewirkt wird, dass es entlang oder durch den mit dem Sorptionsmaterial beschichteten Träger hindurchströmt.

3. Verfahren gemäß irgendeinem der vorhergehenden Ansprüche, **dadurch gekennzeichnet, dass** das Sorptionsmaterial regeneriert wird, indem bewirkt wird, dass das Hilfsgas entlang oder durch den mit dem Sorptionsmaterial beschichteten Träger hindurchströmt.

4. Verfahren gemäß irgendeinem der vorhergehenden Ansprüche, **dadurch gekennzeichnet, dass** das Polymer Vernetzer aufweist, um seine Stabilität im Sorptionszustand sicherzustellen.

5. Vorrichtung zum Trennen einer Substanz von einem Prozessgas, aufweisend:
- Mittel zum Bereitstellen des Prozessgases,
- Mittel zum in-Kontakt-Bringen des Prozessgases mit einem Sorptionsmaterial, um zu bewirken, dass die Substanz aus dem Prozessgas in das Sorptionsmaterial übergeht,
- Mittel zum Ableiten des Prozessgases, von dem die Substanz getrennt wurde, und
- Mittel zum Regenerieren des Sorptionsmaterials durch Aufgeben der darin oder daran sorbierten Substanz an ein Hilfsgas,
wobei:
- als Sorptionsmaterial ein Material ausgewählt ist, das einen Sorptionszustand, in dem es eine relativ hohe Aufnahmekapazität für die Substanz hat, sowie einen Desorptionszustand hat, in dem die Aufnahmekapazität geringer ist,
- die Regenerationsmittel angepasst sind, um das Sorptionsmaterial bei einer Temperatur, die niedriger als der Siedepunkt der sorbierten Substanz ist, aus dem Sorptionszustand in den Desorptionszustand zu übertragen, und
- das Sorptionsmaterial ein Polymer mit einer unteren kritischen Lösungstemperatur (LCST-Polymer) aufweist und die Regenerationsmittel angepasst sind, um das Sorptionsmaterial über seine kritische Lösungstemperatur aufzuheizen,
**dadurch gekennzeichnet, dass** das LCST-Polymer aus der Gruppe ausgewählt wird, die Polyoxazolin und Poly(dimethylaminoethylmethacrylat) (pDMAEMa) aufweist.

6. Trennvorrichtung gemäß Anspruch 5, **dadurch gekennzeichnet, dass** das Sorptionsmaterial auf einem Träger in Form einer Beschichtung angeordnet ist und die Kontaktmittel angepasst sind, um zu bewirken, dass das Prozessgas entlang oder durch den mit dem Sorptionsmaterial beschichteten Träger hindurchströmt.

7. Trennvorrichtung gemäß Anspruch 6, **dadurch gekennzeichnet, dass** die Regenerationsmittel angepasst sind, um zu bewirken, dass das Hilfsgas entlang oder durch den mit dem Sorptionsmaterial beschichteten Träger hindurchströmt.

8. Trennvorrichtung gemäß Anspruch 7, **dadurch gekennzeichnet, dass** der Träger bewegbar ist und abwechselnd mit den Kontaktmitteln und den Regenerationsmitteln verbunden sein kann.

9. Trennvorrichtung gemäß Anspruch 8, **dadurch gekennzeichnet, dass** der Träger Teil eines Kanals ist, der in ein Rad eingebaut ist, das entlang den Kontaktmitteln und den Regenerationsmitteln rotiert.

10. Trennvorrichtung gemäß irgendeinem der Ansprüche 5 bis 9, **dadurch gekennzeichnet, dass** das Polymer Vernetzer aufweist, um seine Stabilität im Sorptionszustand sicherzustellen.

11. Träger mit Sorptionsmaterial, offensichtlich für die Verwendung in einer Trennvorrichtung gemäß irgendeinem der Ansprüche 6 bis 10 vorgesehen, wobei das Sorptionsmaterial ein Polymer mit unterer kritischer Lösungstemperatur (LCST-Polymer) aufweist,
**dadurch gekennzeichnet, dass**
das LCST-Polymer aus der Gruppe ausgewählt ist, die Polyoxazolin und Poly(dimethylaminoethylmethacrylat) (pDMAEMa) aufweist.

## Revendications

1. Procédé pour séparer une substance d'un gaz de transformation, comprenant les étapes de :
a) alimentation du gaz de transformation,
b) mise en contact du gaz de transformation avec un matériau de sorption, la substance passant du gaz de transformation dans le matériau de sorption,
c) déchargement du gaz de transformation duquel la substance a été séparée, et
d) régénération du matériau de sorption en libérant la substance sorbée dans celui-ci ou sur celui-ci dans un gaz auxiliaire,
dans lequel :
- en tant que matériau de sorption, un matériau est utilisé qui a un état de sorption dans lequel il a une capacité d'absorption relativement élevée pour la substance, ainsi qu'un état de désorption dans lequel la capacité d'absorption est plus faible,
- le matériau de sorption est transféré de l'état de sorption vers l'état de désorption à une température plus basse que le point d'ébullition de la substance sorbée à des fins de régénération, et
- le matériau de sorption comprend un polymère ayant une température de solution critique basse (polymère LCST) et est transféré de l'état de sorption vers l'état de désorption par chauffage du polymère au-dessus de sa température de solution critique,
**caractérisé en ce que** le polymère LCST est choisi dans le groupe comprenant la polyoxazoline et le poly(méthacrylate de diméthylaminoéthyle) (pDMAEMa).

2. Procédé selon la revendication 1, **caractérisé en ce que** le matériau de sorption est agencé sur un support sous la forme d'un revêtement et le gaz de transformation est mis en contact avec celui-ci en l'amenant à s'écouler le long de ou dans le support revêtu avec le matériau de sorption.

3. Procédé selon l'une quelconque des revendications précédentes, **caractérisé en ce que** le matériau de sorption est régénéré en amenant le gaz auxiliaire à s'écouler le long de ou dans le support revêtu avec le matériau de sorption.

4. Procédé selon l'une quelconque des revendications précédentes, **caractérisé en ce que** le polymère comprend des agents de réticulation pour assurer sa stabilité dans l'état de sorption.

5. Dispositif pour séparer une substance d'un gaz de transformation, comprenant :
- des moyens pour alimenter le gaz de transformation,
- des moyens pour mettre le gaz de transformation en contact avec un matériau de sorption afin d'amener la substance à passer du gaz de transformation vers le matériau de sorption,
- des moyens pour décharger le gaz de transformation duquel la substance a été séparée, et
- des moyens pour régénérer le matériau de sorption en libérant la substance sorbée dans celui-ci ou sur celui-ci vers un gaz auxiliaire,
dans lequel :
- en tant que matériau de sorption, un matériau est choisi qui a un état de sorption dans lequel il a une capacité d'absorption relativement élevée pour la substance, ainsi qu'un état de désorption dans lequel la capacité d'absorption est plus faible,
- les moyens de régénération sont adaptés pour transférer le matériau de sorption de l'état de sorption vers l'état de désorption à une température plus basse que le point d'ébullition de la substance sorbée, et
- le matériau de sorption comprend un polymère ayant une température de solution critique basse (polymère LCST) et les moyens de régénération sont adaptés pour chauffer le matériau de sorption au-dessus de sa température de solution critique,
**caractérisé en ce que** le polymère LCST est choisi dans le groupe comprenant la polyoxazoline et le poly(méthacrylate de diméthylaminoéthyle) (pDMAEMa).

6. Dispositif de séparation selon la revendication 5, **caractérisé en ce que** le matériau de sorption est agencé sur un support sous la forme d'un revêtement et les moyens de contact sont adaptés pour amener le gaz de transformation à s'écouler le long de ou dans le support revêtu avec le matériau de sorption.

7. Dispositif de séparation selon la revendication 6, **caractérisé en ce que** les moyens de régénération sont adaptés pour amener le gaz auxiliaire à s'écouler le long de ou dans le support revêtu avec le matériau de sorption.

8. Dispositif de séparation selon la revendication 7, **caractérisé en ce que** le support est mobile et peut être connecté alternativement aux moyens de contact et aux moyens de régénération.

9. Dispositif de séparation selon la revendication 8, **caractérisé en ce que** le support fait partie d'un canal qui est incorporé dans une roue tournant le long des moyens de contact et des moyens de régénération.

10. Dispositif de séparation selon l'une quelconque des revendications 5 à 9, **caractérisé en ce que** le polymère comprend des agents de réticulation pour assurer sa stabilité dans l'état de sorption.

11. Support avec matériau de sorption, évidemment destiné à être utilisé dans un dispositif de séparation selon l'une quelconque des revendications 6 à 10, le matériau de sorption comprenant un polymère ayant une température de solution critique basse (polymère LCST),
**caractérisé en ce que**
le polymère LCST est choisi dans le groupe comprenant la polyoxazoline et le poly(méthacrylate de diméthylaminoéthyle) (pDMAEMa).
